(19) Europäisches Patentamt
European Patent Office
Office européen des brevets

(11) **EP 1 167 923 B1**

(12) **EUROPÄISCHE PATENTSCHRIFT**

(45) Veröffentlichungstag und Bekanntmachung des Hinweises auf die Patenterteilung:
**05.12.2012 Patentblatt 2012/49**

(51) Int Cl.:
***G01C 21/34*** *(2006.01)* ***G08G 1/0969*** *(2006.01)*

(21) Anmeldenummer: **01112685.1**

(22) Anmeldetag: **25.05.2001**

(54) **Digitale Strassenkarte und Navigationsverfahren unter Benutzung einer digitalen Strassenkarte**

Digital road map and method of navigation using a digital road map

Carte routière numérique et méthode de navigation utilisant une carte routière numérique

(84) Benannte Vertragsstaaten:
**CH DE ES FR LI SE**

(30) Priorität: **23.06.2000 DE 10030896**

(43) Veröffentlichungstag der Anmeldung:
**02.01.2002 Patentblatt 2002/01**

(73) Patentinhaber: **ROBERT BOSCH GMBH**
**70442 Stuttgart (DE)**

(72) Erfinder: **Hahlweg, Cornelius**
**31139 Hildesheim (DE)**

(56) Entgegenhaltungen:
**DE-A1- 19 906 614**

EP 1 167 923 B1

**Beschreibung**

Digitale Straßenkarte und Navigationsverfahren unter Benutzung einer digitalen Straßenkarte

Die Erfindung betrifft eine digitale Straßenkarte, bei welcher Streckenabschnitte durch mehrere Punkte, insbesondere durch deren Koordinaten, definiert sind, und ein Navigationsverfahren unter Benutzung einer digitalen Straßenkarte, die Informationen zum Höhenverlauf der Streckenabschnitte aufweist.

Bekannte Navigationssysteme für Kraftfahrzeuge arbeiten mit digitalen Straßenkarten, auch Vektorkarten genannt, die das Straßennetz zweidimensional abbilden. Entsprechend erfolgt auch die Ortung nur zweidimensional. Unter gewissen Umständen, beispielsweise bei mehrstöckigen Fahrbahnen, ist jedoch auch das Verfolgen des Höhenverlaufs der Strecke von Interesse. Für eine Höhenmessung ist die Genauigkeit der derzeitigen Satelliten-Navigationssysteme jedoch nicht ausreichend.

Mit der DE 199 06 614 ist bereits eine digitale Straßenkarte vorgeschlagen worden, bei welcher Streckenabschnitte durch mehrere Punkte, insbesondere durch deren Koordinaten, definiert sind in der der Höhenverlauf der Streckenabschnitte in Abhängigkeit von der Wegelänge auf dem Streckenabschnitt definiert ist.

Aufgabe ist es daher, ein Verfolgen der Höhe per Map-Matching zu erlauben.

Diese Aufgabe wird durch die digitale Straßenkarte gemäß Anspruch 1 und das Navigationsverfahren gemäß Anspruch 4 gelöst.

Es ist vorgeschlagen, dass der Höhenverlauf der Streckenabschnitte in Abhängigkeit von der Weglänge auf dem Streckenabschnitt definiert ist.

Die digitale Straßenkarte kann auf geeigneten Datenträgern abgelegt sein oder über geeignete Datenträgern abgelegt sein oder über geeignete Übertragungsverfahren zur Verfügung gestellt werden. Um die zur Speicherung bzw. Übertra gung des Höhenverlaufs erforderliche Datenmenge möglichst gering zu halten, ist bei der Straßenkarte vorgesehen, daß der Höhenverlauf durch Koeffizienten eines Polynoms definiert ist, das dem Höhenverlauf angenähert ist und dessen laufende Variable die Weglänge auf dem Streckenabschnitt ist. Hierdurch erhöht sich der Datenaufwand gegenüber einer digitalen Straßenkarte ohne Höheninformation nur unwesentlich. Insbesondere wird dabei die Tatsache ausgenutzt, daß Höhenänderungen einer Straße über den laufenden Weg sich wesentlich "glatter" gestalten als der Verlauf dieser Straße in der Ebene. Mit der erfindungsgemäßen digitalen Straßenkarte können Ortungsmehrdeutigkeiten, beispielsweise an mehrstöckigen Autobahnkreuzen oder an Serpentinen im Gebirge, weitgehend verhindert werden.

Eine gute Annäherung an den tatsächlichen Höhenverlauf einer Straße wird bei einer vorteilhaften Weiterbildung dadurch erzielt, daß die Annäherung durch die Methode der kleinsten Abstandsquadratsumme an ausgewählten Punkten erfolgt.

Zur weiteren Ersparnis der zusätzlichen Datenmenge trägt eine andere vorteilhafte Ausgestaltung bei, die darin besteht, daß nur für ausgewählte Streckenabschnitte der Höhenverlauf definiert ist.

Bei einem Navigationsverfahren unter Benutzung einer digitalen Straßenkarte, die Informationen zum Höhenverlauf der Streckenabschnitte aufweist, ist vorgesehen, daß die jeweils auf einem Streckenabschnitt zurückgelegte Weglänge und die jeweilige Höhe eines Fahrzeugs ermittelt werden und daß die Höhe mit der Höheninformation der Straßenkarte für die zurückgelegte Wegstrecke verglichen wird. Dabei ist vorzugsweise vorgesehen, daß die Höhe des Fahrzeugs durch Interpolation der Neigung des Fahrzeugs ermittelt wird. Geeignete Neigungssensoren für Fahrzeuge stehen zur Verfügung.

Um Ortungsmehrdeutigkeiten zu vermeiden, kann das Vergleichsergebnis zu einer Plausibilitätsprüfung benutzt werden, ob sich das Fahrzeug auf dem Streckenabschnitt befindet. In DE 197 48 127 A1 wird in Verbindung mit einer Koppelortung ein Neigungssensor beschrieben. Bei derartigen Systemen kann das erfindungsgemäße Verfahren auch dadurch angewendet werden, daß das Vergleichsergebnis zur Korrektur einer durch Koppelung ermittelten Höhe des Fahrzeugs benutzt wird. Dabei ist vorzugsweise vorgesehen, daß das Vergleichsergebnis zum Abspalten einer zur Höheninformation aufzuintegrierenden Höhenkomponente der Beschleunigung benutzt wird.

Ausführungsbeispiele der Erfindung sind in der Zeichnung anhand mehrerer Figuren dargestellt und in der nachfolgenden Beschreibung näher erläutert. Es zeigt:

Fig. 1    eine Schaltungsanordnung zur Durchführung des erfindungsgemäßen Verfahrens,

Fig. 2    einen Streckenabschnitt als Projektion auf die x/y-Ebene,

Fig. 3    den Höhenverlauf in der x-Ebene,

Fig. 4    den Höhenverlauf über die Weglänge und

Fig. 5    die Nachbildung des Höhenverlaufs mittels einer Näherung durch einen Polynom.

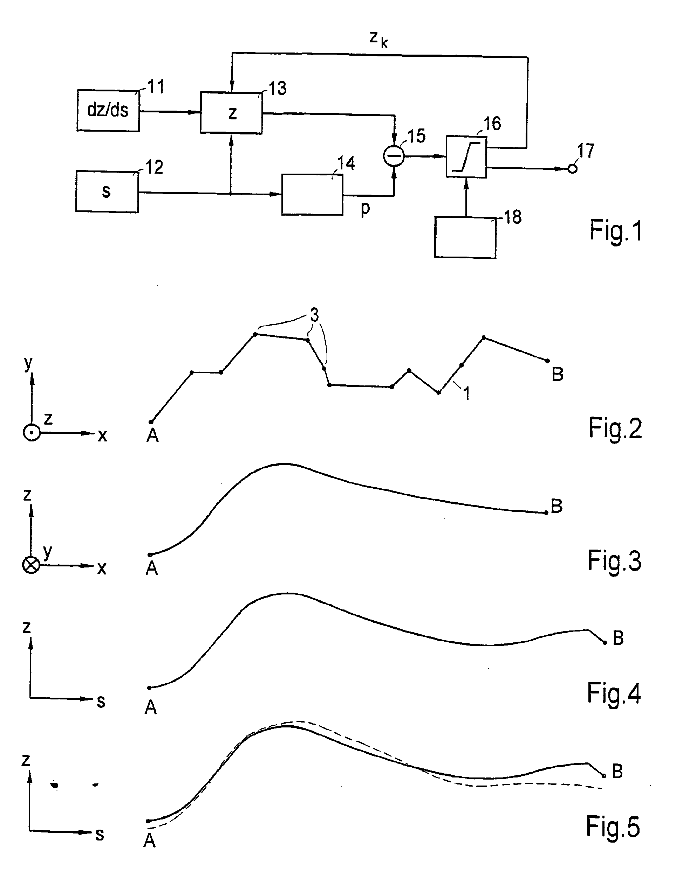

Fig. 2 zeigt die für digitale Straßenkarten typische Draufsicht eines Streckenabschnittes 1 von A bis B mit einer Reihe von Stützpunkten 2. Die Koordinaten y und x sind beispielsweise die geographischen Koordinaten, während die in Fig. 3 dargestellte z-Achse die Höhe bedeutet, die in Fig. 3 über der x-Achse aufgetragen ist. Da jedoch für ein auf der Straße 1 fahrendes Fahrzeug der Höhenverlauf über den jeweils zurückgelegten Weg s interessant ist, wird der Höhenverlauf über den Weg s berechnet, was in Fig. 4 dargestellt ist. Dieser Höhenverlauf, der durch eine in den Figuren nicht dargestellte Anzahl von Stützpunkten repräsentiert wird, wird für Zwecke des erfindungsgemäßen Verfahrens durch ein Polynom angenähert, das in Fig. 5 gestrichelt dargestellt ist.

Die Nachbildung des Höhenverlaufs erfolgt zur Erstellung der digitalen Straßenkarte durch einen Offline-Prozeß, wobei das Profil $z = f(s)$ ist. Somit wird ein Datensatz erhalten:

$$z(s[n]) = z(n), \quad n = 1 \ldots N.$$

Diesem Datensatz wird mittels Fehlerbetragsquadratmethode ein Polynom

$$p(n) = a_0 + a_1 \cdot s(n) + a_2 \cdot s(n)^2 + a_3 \cdot s(n)^3$$

angenähert. Dies erfolgt mit der Forderung

$$\sum_n (h(n) - p(n))^2 \; \dashrightarrow \; \text{Min.}$$

Das Nullsetzen der partiellen Ableitungen nach den Koeffizienten $a_0$ bis $a_3$ liefert ein leicht zu lösendes lineares Gleichungssystem: ...

$$
\begin{vmatrix}
\Sigma h_n \\
\Sigma h_n s_n \\
\Sigma h_n s_n^2 \\
\Sigma h_n s_n^3
\end{vmatrix}
=
\begin{vmatrix}
\Sigma 1 & \Sigma s_n & \Sigma s_n^2 & \Sigma s_n^3 \\
\Sigma s_n & \Sigma s_n^2 & \Sigma s_n^3 & \Sigma s_n^4 \\
\Sigma s_n & \Sigma s_n^3 & \Sigma s_n^4 & \Sigma s_n^5 \\
\Sigma s_n & \Sigma s_n^4 & \Sigma s_n^5 & \Sigma s_n^6
\end{vmatrix}
\cdot
\begin{vmatrix}
a_0 \\
a_1 \\
a_2 \\
a_3
\end{vmatrix}
$$

Als Datenformat kann beispielsweise jedem Streckenabschnitt eine Liste der Koeffizienten des die Höhe beschreibenden Polynoms angehängt werden. Dazu wird ein Status-Bit für die Koeffizientenliste gesetzt. Aus der Länge der Liste ergibt sich dann direkt der angesetzte Grad des Polynoms. Ein solches Datenformat lautet dann beispielsweise:

```
StreckenElement
    status & koeffList = true    (Statusbit gesetzt)
    ...
    listelements                 (Listenbeschreibung)
    ...
    koefflist                    (Liste)
    ...
```

Fig. 1 zeigt als Ausführungsbeispiel die einem Navigationssystem hinzuzufügende Teilsysteme für einen zusätzlichen Abgleich bezüglich der Höhe. Mit Hilfe geeigneter Sensoren wird bei 11 und 12 die Neigung dz/ds und die Strecke s ermittelt. Daraus wird bei 13 die Höhe z gebildet. Der Weg s wird zum Berechnen des zugehörigen Polynomwertes bei 14 verwendet. z und p werden bei 15 subtrahiert.

Die Differenz wird einem Entscheider 16 zugeleitet. Dem Entscheider 16 werden außerdem von einem Ortungssystem (beispielsweise GPS) 18 die durch Ortung gewonnenen x/y-Koordinaten zugeführt. Bei größerer Abweichung wird ein Korrekturwert $z_k$ dem aus dz/ds und s gebildeten z hinzugefügt. Außerdem erzeugt der Entscheider 16 ein Plausibilitätsbit, das einem Ausgang 17 zugeleitet wird. Dieses besagt, ob das Fahrzeug sich auf der durch die Ortung angenommenen Straße befindet oder wegen einer abweichenden Höhe auf einer anderen.

**Patentansprüche**

1. Digitale Straßenkarte, bei welcher Streckenabschnitte durch mehrere Punkte, insbesondere durch deren Koordinaten, definiert sind, wobei der Höhenverlauf der Streckenabschnitte (1) in Abhängigkeit von der Weglänge auf dem Streckenabschnitt definiert ist, **dadurch gekennzeichnet, daß** der Höhenverlauf durch Koeffizienten eines Polynoms definiert ist, das dem Höhenverlauf angenähert ist und dessen laufende Variable die Weglänge auf dem Streckenabschnitt (1) ist.

2. Digitale Straßenkarte nach Anspruch 1, **dadurch gekennzeichnet, daß** die Annäherung durch die Methode der kleinsten Abstandsquadratsumme an ausgewählten Punkten erfolgt.

3. Digitale Straßenkarte nach einem der vorhergehenden Ansprüche, **dadurch gekennzeichnet, daß** nur für ausgewählte Streckenabschnitte (1) der Höhenverlauf definiert ist.

4. Navigationsverfahren unter Benutzung einer digitalen Straßenkarte, die Informationen zum Höhenverlauf der Streckenabschnitte enthält, in dem die jeweils auf einem Streckenabschnitt zurückgelegte Weglänge und die Höhe eines Fahrzeugs, die dem Höhenverlauf entspricht, ermittelt werden und daß die Höhe mit der Höheninformation der Straßenkarte für die zurückgelegte Wegstrecke verglichen wird, **dadurch gekennzeichnet, daß** das Vergleichsergebnis zu einer Plausibilitätsprüfung benutzt wird, ob sich das Fahrzeug auf dem Streckenabschnitt befindet, oder das Vergleichsergebnis zur Korrektur einer durch Koppelung ermittelten Höhe des Fahrzeugs benutzt wird..

5. Verfahren nach Anspruch 4, **dadurch gekennzeichnet, daß** die Höhe des Fahrzeugs durch Interpolation der Neigung des Fahrzeugs ermittelt wird.

6. Verfahren nach Anspruch 4, bei dem das Fahrzeug mit einem Neigungs- und Beschleunigungssensor ausgerüstet ist, **dadurch gekennzeichnet, daß** das Vergleichsergebnis zum Abspalten einer zur Höheninformation aufzuintegrierenden Höhenkomponente der Beschleunigung benutzt wird.

**Claims**

1. Digital road map, in which route sections are defined by a plurality of points, in particular by the coordinates thereof, wherein the altitude profile of the route sections (1) is defined as a function of the distance travelled on the route section, **characterized in that** the altitude profile is defined by coefficients of a polynomial which is approximated to the altitude profile and whose serial variable is the distance travelled on the route section (1).

2. Digital road map according to Claim 1, **characterized in that** the approximation is carried out by means of the method of the smallest sum of the squares of the distance at selected points.

3. Digital road map according to one of the preceding claims, **characterized in that** the altitude profile is defined only for selected route sections (1).

4. Navigation method using a digital road map which contains information on the altitude profile of the route sections, in which the distance respectively travelled on a route section and the altitude of a vehicle which corresponds to the altitude profile are determined, and in that the altitude is compared with the altitude information of the road map for the route travelled on **characterized in that** the comparison result is used for plausibility checking to determine whether the vehicle is located on the route section, or the comparison result is used to correct an altitude of the vehicle which is determined by compound navigation.

5. Method according to Claim 4, **characterized in that** the altitude of the vehicle is determined by interpolation of the inclination of the vehicle.

6. Method according to Claim 4, in which the vehicle is equipped with an inclination and acceleration sensor, **characterized in that** the comparison result is used to divide an altitude component of the acceleration which is to be integrated to form the altitude information.

**Revendications**

1. Carte routière numérique, avec laquelle des portions de trajet sont définies par plusieurs points, notamment par leurs coordonnées, le tracé en hauteur des portions de trajet (1) étant défini en fonction de la longueur du parcours sur la portion de trajet, **caractérisée en ce que** le tracé en hauteur est défini par des coefficients d'un polynôme qui est une approximation du tracé en hauteur et dont la variable courante est la longueur du parcours sur la portion de trajet (1).

2. Carte routière numérique selon la revendication 1, **caractérisée en ce que** l'approximation est réalisée par la méthode de la plus petite somme des carrés des écarts sur des points sélectionnés.

3. Carte routière numérique selon l'une des revendications précédentes, **caractérisée en ce que** le tracé en hauteur n'est défini que pour des portions de trajet (1) choisies.

4. Procédé de navigation en utilisant une carte routière numérique qui contient des informations sur le tracé en hauteur des portions de trajet, dans lequel sont déterminées la longueur de parcours à chaque fois parcourue sur une portion de trajet et la hauteur d'un véhicule qui correspond au tracé en hauteur, et la hauteur est comparée avec l'information de hauteur de la carte routière pour le trajet parcouru, **caractérisé en ce que** le résultat de la comparaison est utilisé pour un contrôle de plausibilité visant à vérifier si le véhicule se trouve sur la portion de trajet ou le résultat de la comparaison est utilisé pour corriger une hauteur du véhicule déterminée par couplage.

5. Procédé selon la revendication 4, **caractérisé en ce que** la hauteur du véhicule est déterminée par interpolation de l'inclinaison du véhicule.

6. Procédé selon la revendication 4, selon lequel le véhicule est équipé d'un capteur d'inclinaison et d'accélération, **caractérisé en ce que** le résultat de la comparaison est utilisé pour séparer une composante de hauteur de l'accélération à intégrer pour l'information de hauteur.

Fig.1

Fig.2

Fig.3

Fig.4

Fig.5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19906614

- DE 19748127 A1